# EUROPÄISCHE PATENTSCHRIFT

(11) **EP 1 924 335 B1**
(45) Veröffentlichungstag und Bekanntmachung des Hinweises auf die Patenterteilung: **16.03.2016**
(21) Anmeldenummer: 06753201.0
(22) Anmeldetag: 29.05.2006
(51) Int. Cl.: B01D 45/08, F01M 13/04

(54) **EINRICHTUNG ZUR TRENNUNG EINES GAS-FLÜSSIGKEITSGEMISCHES**
DEVICE FOR SEPARATING A GAS-LIQUID MIXTURE
DISPOSITIF SERVANT A SEPARER UN MELANGE GAS/LIQUIDE

(30) Priorität: 06.09.2005 DE 102005042286
(43) Veröffentlichungstag der Anmeldung: 28.05.2008
(73) Patentinhaber: Mahle International GmbH, 70376 Stuttgart (DE)
(72) Erfinder: DUNSCH, Robert, 71665 Vaihingen (DE); ENDERICH, Andreas, 73734 Esslingen (DE); GOERLICH, Leszek, 71229 Leonberg (DE); RUPPEL, Stefan, 69126 Heidelberg-Emmertsgrund (DE); ÖZKAYA, Yakup, 70806 Kornwestheim (DE)
(74) Vertreter: BRP Renaud & Partner mbB Rechtsanwälte Patentanwälte Steuerberater
(86) Internationale Anmeldenummer: PCT/DE2006/000914
(87) Internationale Veröffentlichungsnummer: WO 2007/028351

(56) Entgegenhaltungen:
- EP-A- 1 477 641
- CH-A- 127 029
- DE-A1- 1 544 126
- DE-A1- 10 051 307
- DE-A1- 10 320 215
- DE-A1-102005 043 198
- US-A- 1 548 288
- US-A- 3 201 925

## Beschreibung

Die Erfindung betrifft eine Einrichtung zur Trennung eines Gas-Flüssigkeitsgemisches, gemäß dem Oberbegriff des Anspruchs 1.

Eine solche Einrichtung ist bekannt aus US 3 201 925 A.

Aus der US 1548288 A ist es bei Einrichtungen zur Trennung eines Gas-Flüssigkeitsgemisches bekannt, die Beschleunigungsöffnungen als radiale Öffnungen in einer Zylinderwand vorzusehen, die von einer Aufprallfläche aus Fasermaterial umgeben ist. Ein innerhalb des von der Zylinderwand gebildeten Zylinders verschiebbarer Kolben steuert die Anzahl der durchströmten Beschleunigungsöffnungen und damit den gesamt Öffnungsquerschnitt für das Gas-Flüssigkeits-Gemisch.

Eine prinzipiell ähnliche Konstruktion wird in der DE 10 2005 043 198 A1 dargestellt. Hier sind die Beschleunigungsöffnungen In der Zylinderwand gegen eine glatte Gehäusewand gerichtet, an der sich die Flüssigkeit ansammelt, sodass sie In einen Sammelraum herabfließen kann. Der Kolben ist nach Art eines kreisscheibenförmigen Schiebers ausgebildet.

Gemäß der DE 103 20 215 A1 ist vorgesehen, das Gas-Flüssigkeits-Gemisch in den Innenraum eines Zylinders, der an einem axialen Ende abgeschlossen Ist, einströmen zu lassen. Dabei wird die Zylinderwand durch eine Schraubenfeder gebildet, und die einzige Beschleunigungsöffnung wird durch den wendelförmigen Spalt zwischen den Federwindungen gebildet, wobei durch axiale Längenänderung der Schraubenfeder eine Querschnittsänderung des Spaltes in Abhängigkeit vom Volumenstrom des Gas-Flüssigkeits-Gemisches möglich ist. Nach Durchströmung des wendelförmigen Spaltes prallt das Gas-Flüssigkelts-Gemisch auf eine glatte Gehäusewand, an der sich die Flüssigkeitsantelle ansammeln, sodass sie nach abwärts Fließen und letztendlich abgeleitet werden können.

In der CH 127029 A wird eine Einrichtung beschrieben, bei der das Gas-Flüssigkelts-Gemisch wiederum in einen an einem axialen Ende verschlossenen zylinderähnlichen Raum einströmt, dessen Umfangswandung durch aufschwenkbare Klappen gebildet wird, sodass ein vom Volumenstrom des Gas-Flüsslgkeits-Gemisches abhängiger Öffnungsquerschnitt zur Verfügung steht. Nach Durchtritt durch die von den Klappen gebildeten Öffnungen wird das Gas-Flüssigkelts-Gemisch innerhalb eines Gehäuses unter Umlenkung nach Abwärts in eine nach Abwärts führende Ausgangsleitung geführt, wobei Flüssigkeitsteile der dazu notwendigen Umlenkung der Strömung nicht folgen können und sich In einem Ringraum ansammeln, der den Eingang der Ausgangsleistung ringförmig umgibt.

Bei einer aus der DE 100 51307 A1 bekannten Einrichtung ist vorgesehen, dass das Gas-Flüssigkeits-Gemisch In Aufwärtsrichtung eine sich an ihrem stromabwärtigen Ende verengende Rohrleitung durchströmt, die an dem vorgenannten Ende ventliartig mit einem tellerförmigen Verschlusstell zusammenwirkt, sodass ein bezüglich seiner Breite steuerbarer Ringschlitz für den Durchtritt des Gas-Flüssigkeits-Gemisches gebildet wird. Durch einen am kreisscheibenförmigen Teller angeordneten, nach abwärts gerichteten Rand wird dabei das Gas-Flüssigkelts-Gemisch In Radialrichtung nach Abwärts in eine ringförmige Wirbelkammer umgelenkt, in der sich Separationswirbel bilden, sodass eine Trennung von Gas und Flüssigkeitspartikeln erreicht wird. Das Gas strömt dann nach Aufwärts in eine Ausgangsleitung.

Die DE 1544126 A1 zeigt eine Einrichtung, bei der mehrere parallel angeordnete Abscheidezellen durch Ventile einschaltbar sind. Dabei öffnen die Ventile bei unterschiedlichen Differenzdrucken, sodass bei geringem Differenzdruck nur eine oder wenige Abscheidezellen arbeitswirksam sind, während bei hohen Differenzdrucken entsprechend viele Abscheidezellen arbeiten.

Die Erfindung beschäftigt sich bei einer derartigen Einrichtung, die betriebsbeding von größenmäßig sehr unterschiedlichen Volumenströmen beaufschlagt wird, mit dem Problem, bei einer solchen Einrichtung, die kapazitätsmäßig auf einen maximalen, relativ großen Volumenstrom ausgelegt sein muss, auch bei niedrigen Volumenströmen einen möglichst hohen Abscheidegrad erreichen zu können.

Gelöst wird dieses Problem durch eine Ausführung gemäß den kennzeichnenden Merkmalen des Patentanspruches 1.

Vorteilhafte und zweckmäßige Ausgestaltungen sind Gegenstand der Unteransprüche.

### Die Erfindung beruht auf folgendem allgemeinen Gedanken:

Bei niedrigen Volumenströmen sind sämtliche bezüglich ihres Querschnittes steuerbaren Beschleunigungsöffnungen verschlossen. Hierdurch muss der gesamte Volumenstrom durch die größenmäßig nicht steuerbaren Beschleunigungsöffnungen erfolgen und zwar begrenzt auf einen, diesen Beschleunigungsöffnungen zugeordneten Bereich der Aufprallfläche. Das aufzutrennende Gas-Flüssigkeitsgemisch wird hierdurch mit einer relativ hohen Aufprallgeschwindigkeit auf die Aufprallfläche geführt, wodurch eine gute Abscheidung erfolgen kann. Bei zunehmenden Volumenströmen, die zur Verminderung eines zu hohen Druckverlustes innerhalb der Trenneinrichtung zusätzlich durchströmbare Beschleunigungsöffnungen benötigen, werden entsprechend weitere Beschleunigungsöffnungen aufgesteuert.

Erfindungsgemäß befindet sich gemäß dem Hauptanspruch und den hierauf rückbezogenen Ansprüchen die mindestens eine Beschleunigungsöffnung In einer zylindrischen Gehäusewandung, wobei mindestens eine Beschleunigungsöffnung durch ein axial verlagerbares Verschlusselement bezüglich der Größe ihres freien Strömungsquerschnittes steuerbar ist. Den Beschleunigungsöffnungen ist dabei radial gegenüber der zylindrischen Gehäusewandung, in der sie sich befinden, beabstandet eine Aufprall-Ringwand zur Flüssigkeitsabtrennung zugeordnet. Die Aufprallwand ist in vorteilhafter Welse porig und/oder mit einem Fasergestrick, insbesondere einem Vlies bedeckt, um hierdurch die Flüssigkeitsabscheidung zu verbessern.

Vorteilhafte und zweckmäßige Ausführungsbeispiele der Erfindung, auf die eine Reihe der Unteransprüche speziell gerichtet sind, sind in der Zeichnung In schematischer Form dargestellt und werden nachfolgend noch ausführlich erläutert.

In der Zeichnung zeigen
- Fig.1: eine Prinzipdarstellung für eine verstellbare Kulissen-Schiebereinrichtung mit unterschiedlichen Schieberstellungen a bis c,
- Fig.2: eine Prinzipdarstellung für eine schieberlose Kulisseneinrichtung mit differenzdruckabhängig öffnenden Ventilen In einem Teil der Beschleunigungsöffnungen.
- Fig. 3: ein Abscheide-Vergleichsdiagramm für einerseits eine volumengesteuerte und andererseits eine ungesteuerte Trenneinrichtung,
- Fig.4: eine erfindungsgemäß ausgebildete Abscheide-Einrichtung, bei der die Beschleunigungsöffnungen in einer zylindrischen Gehäusewandung liegen, In drei verschiedenen Schnitten nach den Figurenabschnitten a bis c,
- Fig. 5: eine Einrichtung mit einem prinzipiellen Aufbau nach Fig. 4 mit einer - lediglich als Ausschnitt dargestellten - alternativ ausgebildeten, die Beschleunigungsöffnungen erhaltenden zylindrischen Gehäusewandung,
- Fig. 6: eine gegenüber der Ausführungsform nach Fig. 5 nichmals andersartig ausgebildete - wiederum lediglich als Ausschnitt dargestellte - zylindrische Gehäusewandungen,
- Fig. 7a, b; 8a, b: gegenüber den Ausführungen nach Fig. 5 und 6 zwei weitere Male geänderte - wiederum jeweils lediglich als Ausschnitte dargestellte - zylindrische Gehäusewandungen als Längsschnitte in den Abschnitten (a) und Draufsichten in den Abschnitten (b).

### Fig. 1

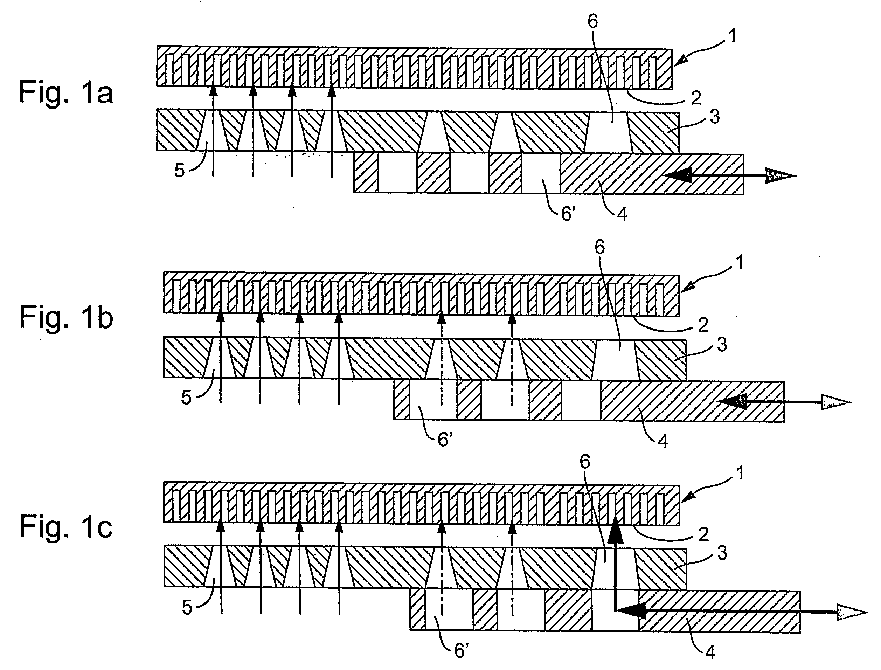

Eine Trenneinrichtung in einer Ausführung nach Fig. 1 enthält ein Aufprallelement 1. Dieses Aufprallelement 1 besitzt einen plattenförmigen Aufbau mit einer durch stegartig angeordnete Schikanen 2 beaufschlagten Aufprallfläche.

Dem Aufprallelement 1 mit geringem Abstand zugeordnet ist eine aus einer Kulisse 3 und einem dieser zugeordneten Schieber 4 bestehende Einrichtung. In der Kulisse 3 sind erste und zweite Beschleunigungsöffnungen 5; 6 vorgesehen. Den zweiten Beschleunigungsöffnungen 6 sind in dem Schieber 4 Öffnungen 6' zugeordnet. Der Schieber 4 kann derart verschoben werden, dass die zweiten Öffnungen 6 der Kulisse 3 geschlossen oder geöffnet sind. In geöffnetem Zustand der zweiten Beschleunigungsöffnungen 6 geben die Schieber-Öffnungen 6' die Strömungsquerschnitte der zweiten Beschleunigungsöffnungen 6 ganz oder teilweise frei. Die Öffnungen 6' sind in dem Schieber 4 derart angeordnet, dass je nach Schieberstellung ein Teil der zweiten Beschleunigungsöffnungen 6 geöffnet und ein anderer Teil geschlossen sein kann, wobei Zwischenstellungen möglich sind. Bei der Stellung des Schiebers 4 nach Fig. 1a sind lediglich die ersten Beschleunigungsöffnungen 5 geöffnet, während sämtliche zweiten Beschleunigungsöffnungen 6 geschlossen sind. Dieser Zustand wird bei niedrigen Volumenströmen zu trennender Flüssigkeit-Gas-Gemische geschaltet, um auf einem begrenzten Bereich der Aufprallfläche des Aufprallelementes 1 möglichst hohe Aufprallgeschwindigkeiten des Flüssigkeit-Gas-Gemisches zu erhalten. Eine Beaufschlagung einer derart begrenzten Fläche des Aufprallelementes 1 mit einzelnen, wenigen Einzelvolumenströmen hoher Geschwindigkeit gewährleistet einen optimalen Abscheidegrad.

Bei der Schaltstellung des Schiebers 4 nach Fig. 1b sind ein Teil der zweiten Beschleunigungsöffnungen 6 vollständig geöffnet zugeschaltet, während ein weiterer Teil lediglich mit einem Teilbereich zugeschaltet ist.

Bei der Schaltstellung des Schiebers 4 nach Fig. 1c sind sämtliche Beschleunigungsöffnungen 5, 6 vollständig geöffnet. Dieser Schaltzustand liegt bei einem betriebsbedingt maximalen Gemischvolumenstrom vor, das heißt bei einem Gemischvolumenstrom, für das die Einrichtung maximal ausgelegt ist.

### Fig. 2

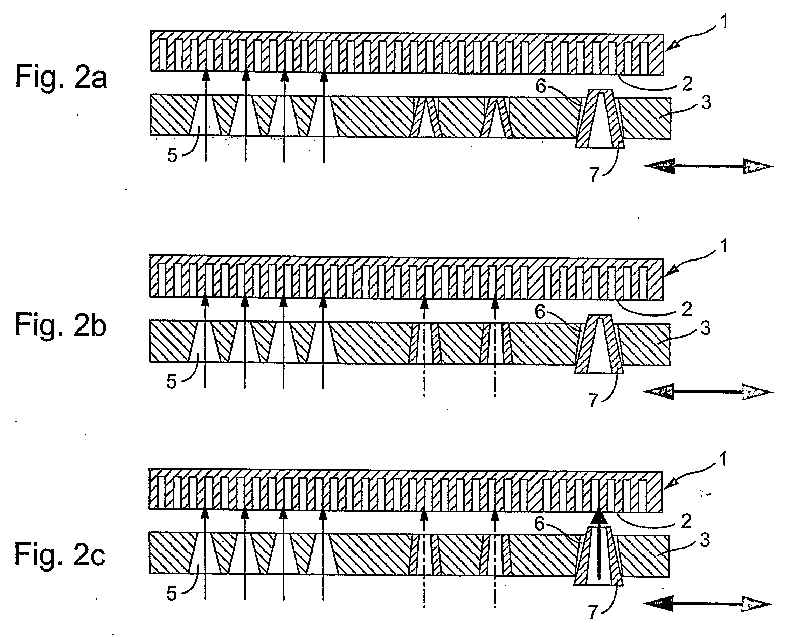

Bei der Ausführung nach Fig. 2 wird der Schieber 4 der Einrichtung nach Fig. 1 funktionell durch in die zweiten Öffnungen 6 eingesetzte Ventile 7 ersetzt. Bei diesen Ventilen 7 handelt es sich um solche, die sich differenzdruckabhängig selbsttätig öffnen. Dabei handelt es sich um Ventile 7, die so ausgebildet sind, dass sie erst bei Überschreiten eines vorgegebenen Differenzdruckes öffnen. Dabei können in den einzelnen zweiten Beschleunigungsöffnungen 6 Ventile eingesetzt werden, die erst bei unterschiedlich hoch vorgegebenen Differenzdrücken öffnen. Dabei ist auf einfache Weise eine Auslegung möglich, nach der mit ansteigendem GemischVolumenstrom und damit verbunden einem ansteigenden Differenzdruck an den Beschleunigungsöffnungen zunehmend mehr Ventile 7 öffnen. Derartige Ventile 7 sind im Stand der Technik an sich bekannt und können beispielsweise als sogenannte Lippenventile ausgebildet sein. In den einzelnen Abschnitten der Fig. 2 sind die Ventile in unterschiedlichen Schließ- bzw. Öffnungszuständen gezeichnet. Dabei zeigen die einzelnen Abschnitte a bis c jeweils Einrichtungszustände mit zunehmenden Differenzdrücken an den Beschleunigungsöffnungen 5, 6 auf.

Die Pfeile in den Beschleunigungsöffnungen 5, 6 in den Fig. 1 und 2 sind Strömungspfeile und geben die Gemisch-Einzelströme durch die einzelnen Beschleunigungsöffnungen 5, 6 an.

Die Darstellung der Einrichtung ist lediglich schematischer Art, wobei die gezeichneten Einrichtungen Bestandteil einer Trenneinrichtung nach der eingangs zum Stand der Technik zitierten US 6,290,738 B1 sein könnten.

### Fig. 3

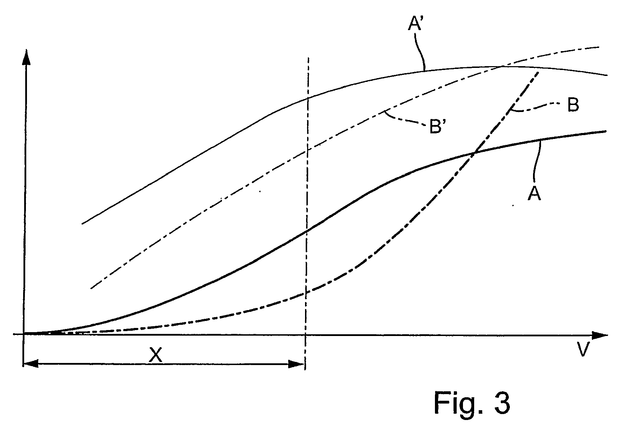

In dem Diagramm nach Fig. 3 sind in Abhängigkeit des auf der Abszisse eingetragenen Flüssigkeit-Gas-Volumenstromes V eingetragen als Vergleich zueinander einerseits die Differenzdrücke stromauf und stromab der Beschleunigungsöffnungen 5, 6 und andererseits die zugehörigen Abscheidegrade für zum einen eine volumengesteuerte und zum anderen eine ungesteuerte Einrichtung.

Dabei zeigen die durchgezogenen Linien A, B die jeweiligen Differenzdrücke und die Kurven A' und B' die zugehörigen Abscheidegrade an und zwar diejenigen A und A' mit Bezug auf eine volumengesteuerte und die Linien B, B' mit Bezug auf eine ungesteuerte Einrichtung. Dieser Vergleich zeigt recht deutlich eine Erhöhung des Abscheidegrades bei niedrigen Volumenströmen für volumengesteuerte Trenneinrichtungen, das heißt Trenneinrichtungen, bei denen bei niedrigen Volumenströmen möglichst hohe Differenzdrücke an Beschleunigungsöffnungen herrschen, wozu bei geringem Volumenströmen jeweils nur eine begrenzte Anzahl der insgesamt vorhandenen Beschleunigungsöffnungen 5 und 6 durchströmbar geschaltet ist.

In dem Diagramm ist der in dem eigentlichen Arbeitsbereich liegende Volumenstrom mit X eingetragen. Darüber hinausgehende Volumenströme erstrecken sich in der Regel bereits in einen sich daran anschließenden Sicherheitsbereich. Wichtig ist daher die in dem Arbeitsbereich deutlich erkennbare Steigerung des Abscheidegrades, die durch eine erfindungsgemäße Einrichtung erreichbar ist.

### Fig. 4

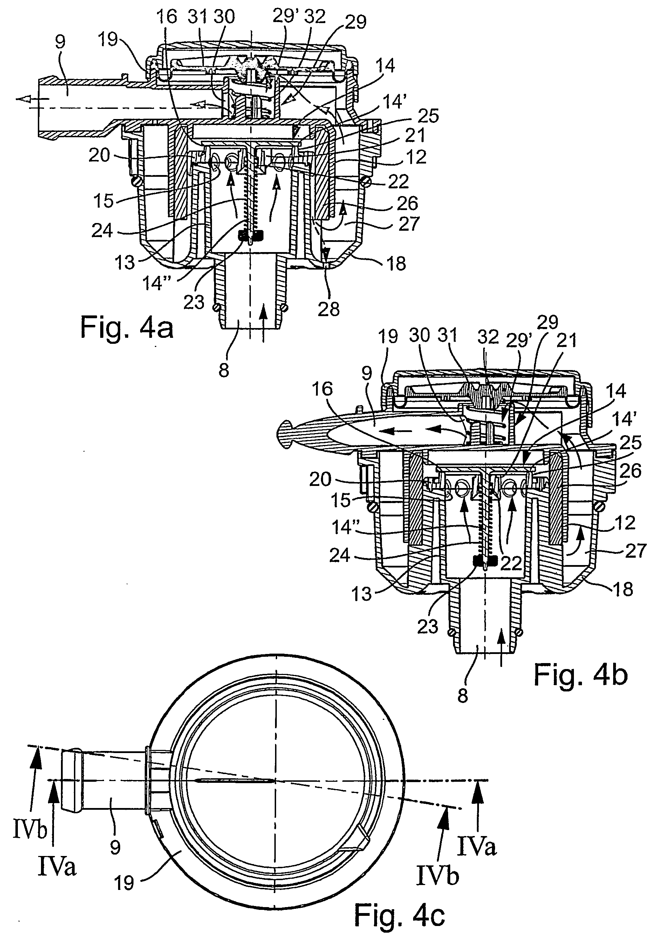

Als Gas-Flüssigkeits-Trenneinrichtung ist in Fig. 4 speziell ein Ölnebelabscheider eines Verbrennungsmotors eines Kraftfahrzeuges dargestellt. Bei diesem Ölnebelabscheider wird Ölnebel aus einem nicht gezeichneten Kurbelraum des Verbrennungsmotors durch einen Einlasskanal 8 angesaugt, wobei der nach der Abtrennung von Ölnebelteilchen verbleibende Luftstrom die als Ölnebelabscheider ausgebildete Einrichtung durch den Auslasskanal 9 verlässt. Die Trenneinrichtung selbst durchströmt der Ölnebel bzw. die von Öltröpfchen schließlich befreite Luft auf einem durch durchgezogen eingetragene Pfeile markierten Strömungsweg. Abgeschiedene Öltröpfchen verlassen die Einrichtung in einem durch einen unterbrochenen Pfeil angedeuteten Flüssigkeitsstrom. Im einzelnen wird auf die Durchströmung und die Auftrennung des Ölnebelstromes innerhalb der Trenneinrichtung nachstehend noch näher eingegangen werden. Die vorgenannten Strömungspfeile sind lediglich in dem Teilabschnitt a der Fig. 4 eingetragen.

Das eigentliche Herzstück der Trenneinrichtung umfasst eine zylindrische Gehäusewandung 13 mit verschiedenen ersten und zweiten Beschleunigungsöffnungen 15; 16, Verschlusselement 14 sowie eine den Beschleunigungsöffnungen 15, 16 zugehörige Aufprallringwand 12. Den vorgenannten Bauteilen 12 bis 16 entsprechen in den Ausführungen nach den Fig. 1 und 2 die Bauteile mit den jeweils um die Zahl 10 verminderten Bezugszahlen 2 bis 6.

Die zylindrische Gehäusewandung 13 ist nahezu vollständig einstückiger Bestandteil eines Unterteiles 18 des insgesamt aus einem Oberteil 19 und dem Unterteil 18 bestehenden Ölnebelabscheiders. An dem axial abströmseitigen Ende der zylindrischen Gehäusewandung 13 sind auf deren Umfang verteilt eine Reihe von ersten Beschleunigungsöffnungen 15 vorgesehen mit jeweils gegenüber der Achse der zylindrischen Wandung 13 radialen Öffnungsachsen. Für eine einfache Herstellbarkeit der ersten Beschleunigungsöffnungen 15 innerhalb der zylindrischen Gehäusewandung 13 des Unterteils 18, das aus Kunststoff geformt bestehen kann, liegen die Beschleunigungsöffnungen 15 in einem Grenzbereich zwischen einem Ansatzteil 20 und dem einstückig innerhalb des Unterteiles liegenden Bereich der zylindrischen Gehäusewandung 13. Das Ansatzteil 20 ist mit dem angrenzenden Bereich der zylindrischen Gehäusewandung 13 fest und dicht verbunden. Dabei sind in dem Ansatzteil 20 einerseits und der zylindrischen Gehäusewand 13 andererseits jeweils Teilbereiche der ersten Beschleunigungsöffnungen 15 vorgesehen, die nach einem Verbinden der beiden Teile 20 und 13 die umfangsmäßig geschlossenen ersten Beschleunigungsöffnungen 15 bilden. In dem Ansatzteil befindet sich über radiale Streben 21 gehalten ein Lager 22 für das Verschlusselement 14.

Das Verschlusselement 14 besteht aus einem scheibenförmigen Teller 14' sowie einem von dessen Zentrum senkrecht abstehenden Stab 14". An dem von dem scheibenförmigen Teller 14' abgewandten Ende des Stabes 14" befindet sich ein Widerlager 23. Zwischen dem Widerlager 23 und dem Lager 22 ist eine Schraubenfeder 24 gespannt. Durch die Kraft der Schraubenfeder 24 wird der scheibenförmige Teller 14' an eine angrenzende, ringförmige Stirnkante 25 der zylindrischen Gehäusewandung 13 angedrückt. Wirkt auf den scheibenförmigen Teller 14' eine der Schraubenfeder 14 entgegengerichtete, gegenüber der Schraubenfederkraft höhere Kraft ein, hebt sich der scheibenförmige Teller 14' von der ringförmigen Stirnkante 25 ab. Hierdurch entsteht zwischen dem scheibenförmigen Teller 14' und der ringförmigen Stirnkante 25 der zylindrischen Gehäusewandung 13 ein radialer Ringspalt. Dieser Ringspalt stellt eine bezüglich seiner Spaltweit steuerbare umlaufende zweite Beschleunigungsöffnung 16 dar. Das Verschlusselement 14 wirkt damit funktionell als ein Ventil 7 entsprechend der Trenneinrichtung nach den Fig. 1 und 2. Die ein Öffnen des Verschlusselementes 14 bewirkende Kraft wird durch einen im Betrieb des Ölnebelabscheiders an diesem abströmseitig anstehenden Unterdruck erzeugt. Die Kraft der Schraubenfeder 24 ist derart auszulegen, dass abhängig von möglichen Unterdruckbetriebszuständen die radial umlaufende zweite Beschleunigungsöffnung 16, das heißt der betreffende Ringspalt mehr oder weniger geöffnet ist und zwar zwischen einem festlegbaren Maximalwert und einem Verschlusszustand.

Die zylindrische Gehäusewandung 13 wird radial außen mit Abstand von einer Aufprallringwand 12 umgeben.

Diese Aufprallringwand 12 ist einstückiger Bestandteil des Oberteiles 19 des Ölnebelabscheidegehäuses. Am Innenumfang der Aufprallringwand 12 befindet sich in einem Ringraum zwischen der Aufprallringwand 12 und dem Außenumfang der zylindrischen Gehäusewandung 13 ein Vlies 26 als Abscheidehilfe für abzutrennende Öltröpfchen innerhalb der Aufprallringwand 12. Zwischen der Außenwandung der zylindrischen Gehäusewandung 13 zusammen mit der Aufprallringwand 12 einerseits und der Außenwand des Abscheidegehäuses andererseits, das aus dem Unterteil 18 und dem mit diesem verbundenen Oberteil 19 besteht, befindet sich ein Ringraum 27. Am Boden dieses Ringraumes 27 ist eine Abflussöffnung 28 für innerhalb des Ölnebelabscheiders abgeschiedenes Öl vorgesehen.

In das Oberteil 19 einstückig eingeformt sind der Auslasskanal 9 sowie Teile eines Druckregelventiles 29. Der in das Oberteil 19 integrierte Bereich des Druckregelventiles 29 ist als ein Napf 29' ausgeführt mit einem geschlossenen Boden. Radial besitzt dieser Napfbereich eine Verbindungsöffnung 30 zu dem Auslasskanal 9 hin. Der dem geschlossenen Boden des Napfes 29' abgewandte axial offene Bereich des Druckregelventil-Napfes 29' wirkt mit einer Membran 31 zusammen, die Bestandteil des Druckregelventiles 29 ist. Die Membran 31 ist radial außen in dem Oberteil 19 gelagert. Diese Membran 31 bildet eine bewegliche Begrenzungswand zwischen dem unterdruckbeaufschlagbaren Innenraum des Ölnebelabscheiders und der Atmosphäre. Mit Hilfe einer in dem Napf 29' des Druckregelventiles 29 gelagerten und sich dort abstützenden Schraubenfeder 32 wird das Druckregelventil 29 bei einem Druckausgleich an der Membran 31 in vollständig geöffnetem Zustand gehalten, das heißt die Membran liegt nicht an der Stirnseite des Napfes 29' des Druckregelventiles 29 dichtend an. Die Federkraft der Schraubenfeder 32 ist derart ausgelegt, dass das Druckregelventil 29 erst nach Überschreiten eines vorgebbaren Unterdruckgrenzwertes innerhalb des Ölnebelabscheiders schließt.

Der vorstehend in seinem Aufbau beschriebene Ölnebelabscheider funktioniert wie folgt.

Bei Anlegen eines Unterdruckes an den Auslasskanal 9 gegenüber einem in der Zeichnung nicht dargestellten Kurbelraum eines Verbrennungsmotors, an den der Einlasskanal 8 angeschlossen ist, wird der Ölnebelabscheider in der von den Pfeilen angegebenen Form durchströmt. Bei einem geringen Unterdruck, das heißt bei geringem Störmungsvolumen, ist die die von dem Verschlusselement 14 steuerbare zweite Beschleunigungsöffnung 16 geschlossen, das heißt der Ölnebel durchströmt lediglich die ersten Beschleunigungsöffnungen 15. Aus den ersten Beschleunigungsöffnungen 15 austretend prallt der jeweilige Ölnebelstrom auf das Vlies 26 der Aufprallringwand 12. Innerhalb des Vlieses 26 koaguliert der Ölanteil aus dem Ölnebel, um nach unten in den Ringraum 27 des Ölnebelabscheiders abtropfen zu können, während die insoweit von Ölanteilen befreite Luft zum Auslasskanal 9 hinströmen kann. Ob den Ölnebelabscheider tatsächlich Ölnebel durchströmen kann, hängt von dem an dem Auslasskanal 9 angelegten Unterdruck ab. Steigt der Unterdruck in dem Auslasskanal 9 über einen vorgegebenen Grenzwert an, schließt das Druckregelventil 29. Auf diese Weise wird vermieden, dass ungewollt in dem Kurbelraum des Verbrennungsmotors, mit dem der Einlasskanal 8 strömungsmäßig verbunden ist, unerwünscht beziehungsweise unzulässig hoher Unterdruck vorliegt.

Herrscht innerhalb des Ölnebelabscheiders ein hoher, jedoch noch zulässiger Unterdruck oberhalb eines vorgebbaren Grenzwertes, öffnet das Verschlusselement 14, wodurch zusätzlich zu den Strömungsquerschnitten der ersten Beschleunigungsöffnungen 15 die zweite Beschleunigungsöffnung 16 strömungsaktiv wird. Dabei wird der Strömungsquerschnitt der zweiten Beschleunigungsöffnung 16 von der Höhe des Unterdruckes, das heißt von der Differenz zwischen dem Unterdruck und der Gegenkraft der Schraubenfeder 24 an dem scheibenförmigen Teller 14' bestimmt. Durch die Steuerbarkeit des Strömungsquerschnittes der radial umlaufenden zweiten Beschleunigungsöffnung 16 kann die Strömungsgeschwindigkeit in den Beschleunigungsöffnungen 15 und 16 trotz betriebsbedingter Unterschiede in den Ölnebelgesamtvolumenströmen auf abscheidetechnisch relativ konstanten Werten gehalten werden.

### Fig. 5

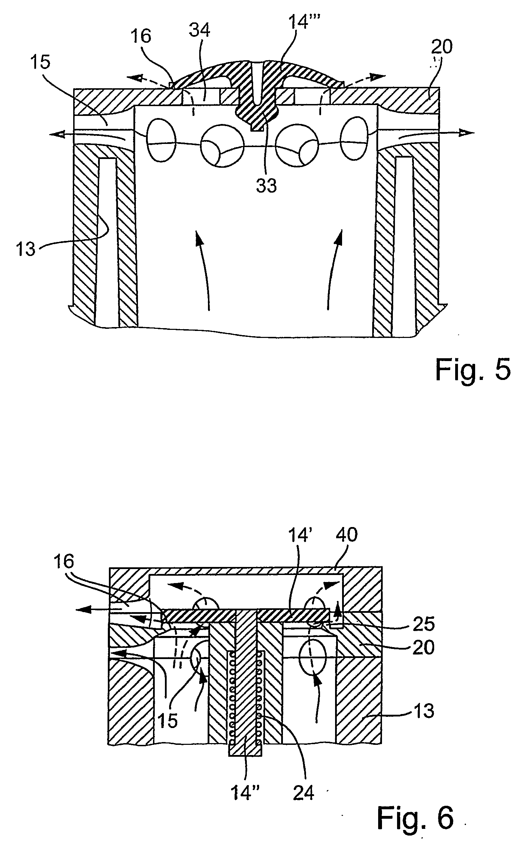

Der Unterschied der Ausführung nach Fig. 5 gegenüber derjenigen nach Fig. 4 besteht ausschließlich in der Ausbildung und in dem Öffnungsmechanismus der querschnittsmäßig steuerbaren zweiten Beschleunigungsöffnung 16. In Fig. 5 ist daher auch lediglich dieser Bereich ausschnittsweise dargestellt.

Anstelle des aus einem federbelasteten Teller 14' bestehenden Verschlusselementes 14 ist bei der Ausführung nach Fig. 5 eine Membran 14"' mit einem angeformten Lagerfuß 33 vorgesehen. Das Ansatzteil 20 ist bei der Ausführung nach Fig. 5 eine axial stirnseitige Verschlussscheibe gegenüber dem Innenraum der zylindrischen Gehäusewandung 13. In dieser Verschlussscheibe sind von der Membran 14"' abdeckbare axiale Durchgangsöffnungen 34 vorgesehen. Der Funktion der Schraubenfeder 24 des Verschlusselementes 14' nach der Ausführung in Fig. 4 entspricht die elastische Spannkraft der Membran 14"' in Fig. 5. Die radial umlaufende zweite Beschleunigungsöffnung 16 bildet sich bei der Ausführung nach Fig. 5 durch ein Anheben des äußeren Umfangsrandes der Membran 14"' gegenüber der Verschlussscheibe aus; die von dem Ansatzteil 20 gebildet wird.

### Fig. 6

Die Ausführung nach Fig. 6 unterscheidet sich von derjenigen nach Fig. 4 lediglich in demjenigen Bereich, in dem bereits bei der Ausführung nach Fig. 5 ein Unterschied gegenüber der Ausführung nach Fig. 4 besteht.

Der scheibenförmige Teller 14' ist hier durch eine Kappe 40 überdeckt, die fest über ein, bei den vorhergehenden Ausführungen bereits vorhandenes Ansatzteil 20 mit der zylindrischen Gehäusewandung 13 verbunden ist. In diese Kappe 40 sowie das angrenzende Ansatzteil 20 sind für eine gemeinsame Ausbildung düsenartige zweite Beschleunigungsöffnungen 16 eingearbeitet. Diese düsenartigen Beschleunigungsöffnungen 16 folgen stromab der, durch den scheibenförmigen Teller 14' direkt steuerbaren radialen Schlitzöffnung, die bei der Ausführung nach Fig. 5 bereits für sich allein eine zweite Beschleunigungsöffnung 16 bildet.

### Fig. 7a, b

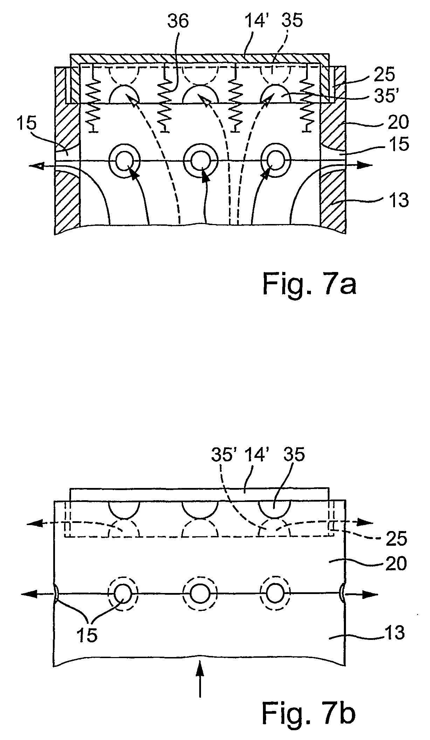

Auch die Ausführung nach Fig. 7a, b unterscheidet sich von derjenigen nach Fig. 4 lediglich in demjenigen Bereich, in dem bei der Ausführung nach Fig. 5 ein Unterschied gegenüber der Ausführung nach Fig. 4 besteht.

Die Ausbildung der ersten Beschleunigungsöffnungen 15, deren Querschnitt innerhalb der zylindrischen Gehäusewandung 13 unveränderbar ist, bleibt bei der Ausführung nach Fig. 7a, b unverändert. Die Veränderung gegenüber Fig. 4 besteht damit lediglich in einer abweichenden Ausbildung des Verschlusselementes 14 im Zusammenspiel mit dem ringförmigen Stirnkantenbereich 25 der zylindrischen Gehäusewandung 13. Während bei der Ausführung nach Fig. 4 durch Öffnen des scheibenförmigen Tellers 14' ein radial umlaufender Ringspalt mit gleicher Spaltweite erzeugt wird, ist dies bei der Ausführung nach Fig. 7 nicht der Fall. Erreicht wird dies bei der Ausführung nach Fig. 7 konkret beispielsweise durch insbesondere eine andersartige Ausbildung des ringförmigen Stirnkantenbereiches 25 der zylindrischen Gehäusewandung 13. Bei der Ausführung nach Fig. 7 sind in dem ringförmigen Stirnkantenbereich 25, über dessen Stirnkantenumfang verteilt, einzelne, radiale, nutartige, zur Stirnkante hin offene Ausnehmungen 35 vorgesehen. Bleibt der scheibenförmige Teller 14' gegenüber der Ausführung nach Fig. 4 unverändert, so muss er durchmessermäßig innerhalb des Stirnkantenbereiches 25 der zylindrischen Gehäusewandung 13 ausgebildet sein, um radial innerhalb der Stirnkante axial verlagert werden zu können. Je nach axialer Verlagerung beziehungsweise Position sind die radialen Ausnehmungen 35 querschnittsmäßig mehr oder weniger geöffnet und bilden damit einen jeweiligen Teilbereich der zweiten Beschleunigungsöffnungen 16. Diese Teilbereiche ergänzende Bereiche sind bei der gezeichneten Ausführung in dem scheibenförmigen Teller 14' als radiale Ausnehmungen 35' vorgesehen. Grundsätzlich ausreichend ist es allerdings, wenn nur entweder in dem scheibenförmigen Teller 14' oder in der zylindrischen Gehäusewandung radiale Ausnehmungen 35; 35' vorgesehen sind. Bei der Ausführung nach Fig. 7 ist die Schraubenfeder 24 nach der Ausführung in Fig. 6 durch funktional gleichartig wirkende Zugfedern 36 aus Gründen einer vereinfachten, schematisierten zeichnerischen Darstellung ersetzt.

### Fig. 8a, b

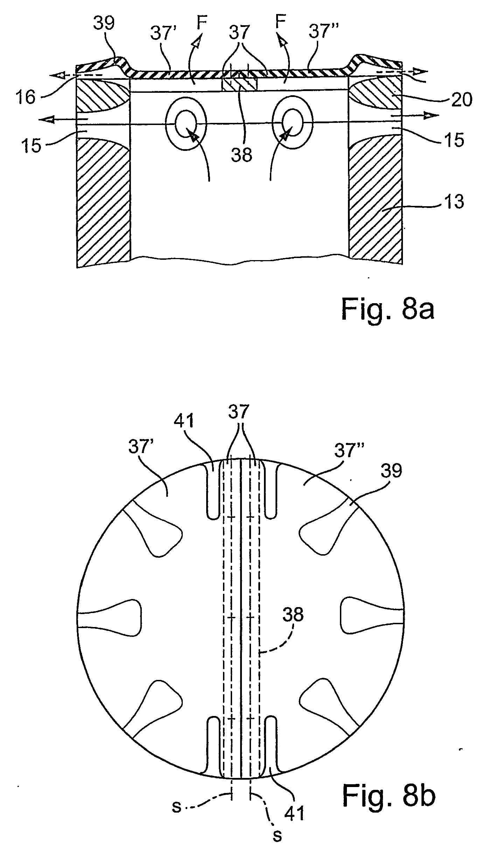

Die Ausführung nach Fig. 8a, b unterscheidet sich von derjenigen in Fig. 4 wiederum lediglich in dem, in den Figuren 5 bis 7 jeweils dargestellten Bereich.

Das Verschlusselement 14 ist hier als eine zweiteilige Blattfeder 37 ausgebildet, wobei diese sich konkret aus zwei Halbkreisflächen-Abschnitten 37', 37" zusammensetzt. Jeder dieser beiden Abschnitte 37', 37" ist im Bereich seiner geraden Kante schwenkbar an einem Brückensteg 38 der zylindrischen Gehäusewandung 13 durch beispielsweise Schrauben oder Nieten fixiert. Damit sich auf dem äußeren Umfang der Blattfeder 37 düsenartige, zweite steuerbare Beschleunigungsöffnungen ausbilden können, sind dort einzelne Sicken 39 eingeformt. Die zweiten Beschleunigungsöffnungen 16 öffnen sich bei einem entsprechend hoch an der Blattfeder 37 von außen anstehendem Unterdruck gegenüber dem Inneren der zylindrischen Gehäusewandung 13. Bei einem Öffnen der zweiten Beschleunigungsöffnüngen 16 schwenken die Blattfeder-Abschnitte 37', 37" entsprechend den Pfeilen F in Fig. 8a nach oben um jeweils eine in Fig. 8b-eingezeichnete Schwenkachse S.

In den Blattfeder-Abschnitten 37', 37" sind jeweils in der Nähe der Anlenkung dieser Abschnitte an die zylindrische Gehäusewandung 13 radiale Schlitze 41 zur gezielten Einstellung einer gewünschten Federkonstante vorgesehen.

Alle in der Beschreibung und in den nachfolgenden Ansprüchen dargestellten Merkmale können sowohl einzeln als auch in beliebiger Form miteinander kombiniert erfindungswesentlich sein.

## Patentansprüche

1. Zur Entlüftung eines Kurbelgehäuses eines Verbrennungsmotors einsetzbare Einrichtung zur Trennung eines Gas-Flüssigkeits-Gemisches, In dem der Flüssigkeitsanteil in Form kleiner Partikel vorliegt, durch Abtrennen und Koagulieren der Flüssigkeitspartikel an einer Aufprallfläche, auf die das Flüssigkeitsgemisch nach einer Beschleunigung in hierfür vorgesehenen, Beschleunigungsöffnungen etwa senkrecht aufprallt,
wobei der Gesamtquerschnitt der In einem Strömungsweg zwischen einer Eingangsselte oder einem Eingangskanal (8) und einer Ausgangsseite oder einem Ausgangskanal (9) angeordneten, Beschleunigungsöffnungen (5, 6, 15, 16), zwischen einem bei einem niedrigen Volumenstrom geringen und einem bei einem hohen Volumenstrom großen Gesamtquerschnitt variiert wird, wobei zumindest ein vorlumenstromabhängig sich verlagerndes Verschlusselement (4, 14) das Maß der Durchströmbarkeit der Beschleunigungsöffnungen (5, 6, 15, 16) der Einrichtung steuert, wobei zumindest eine Beschieunlgungsöffnung (15, 16) eine zylindrische Gehäusewandung (13) radial durchdringt und das Verschlusselement (14) längs der Achse der zylindrischen Gehäusewandung (13) verschiebbar ist und der Querschnitt lediglich eines Teils der Beschleunigungsöffnungen steuerbar ist,
**dadurch gekennzeichnet,**
**dass** als steuerbare Beschleunigungsöffnung (16) ein um die Achse der zylinderischen Gehäusewandung (13) radial umlaufender Schlitz ausgebildet ist, der volumenstromabhängig unterschiedlich weit geöffnet oder geschlossen ist, und dass folgende Merkmale vorgesehen sind:
- die radial umlaufende, die Beschleunigungsöffnung (16) darstellende Schlitzöffnung ist an einem ausgangsseitigen axialen Ende der zylinderischen Gehäusewandung (13) vorgesehen,
- das Verschlusselement (14) besteht aus einem mit einer axialen Stirnseite der zylindrischen Gehäusewandung (13) nach Art eines Ventils (7) zusammenwirkenden, federbelasteten, scheibenförmigen Teller (14') durch den die axiale Stirnseite verschließbar ist, wobei die Federkraft In Richtung eines Schließens des Ventiles (7) wirkt und der Federkraft ein außerhalb der zylindrischen Wandung (13) herrschender, auf den scheibenförmigen Teller (14') einwirkender Unterdruck in Richtung eines Öffnen des Ventils (7) entgegenwirkt, wobei der Grad der Öffnung des Ventils (7), das heißt die axiale Schlitzhöhe zwischen dem Teller (14') und der Gehäusewandung (13), von der Höhe des Unterdrucks abhängig ist.

2. Einrichtung nach Anspruch 1,
**dadurch gekennzeichnet,**
**dass** der scheibenförmige Teller (14') als eine ein- oder mehrteilige Blattfeder (37; 37'; 37") ausgebildet ist.

3. Einrichtung nach Anspruch 2,
**dadurch gekennzeichnet,**
**dass** am Außenumfang der Blattfeder (37) radiale Düsenabschnitte ausbildende Sicken (39) eingeformt sind.

4. Einrichtung nach Anspruch 2 oder 3,
**dadurch gekennzeichnet,**
**dass** die Blattfeder (37) an der zylindrischen Gehäusewandung (13) aufschwenkbar angelenkt ist.

5. Einrichtung nach einem der Ansprüche 1 bis 4,
**dadurch gekennzeichnet,**
**dass** innerhalb der zylindrischen Gehäusewandung (13) axial eingangsseitig über den Umfang dieser Gehäusewandung verteilt erste Beschleunigungsöffnungen (15) vorgesehen sind, deren Öffnungsquerschnitt jeweils unveränderbar ist.

6. Einrichtung nach einem der Ansprüche 1 bis 5,
**dadurch gekennzeichnet,**
**dass** die die Beschleunigungsöffnungen (15, 16) enthaltende zylindrische Gehäusewandung (13) von einer radial außen beabstandeten Aufprallringwand (12) zur Aufnahme des aus der mindestens einen Beschleunigungsöffnung (15, 16) austretenden Gemischstromes umfasst ist.

7. Einrichtung nach Anspruch 6,
**dadurch gekennzeichnet,**
**dass** die Aufpraliringwand (12) einen radial innen liegenden, porösen Schichtbereich aufweist.

8. Einrichtung nach Anspruch 7,
**dadurch gekennzeichnet,**
**dass** der poröse Schichtbereich aus Fasermaterial besteht.

9. Einrichtung nach Anspruch 8,
**dadurch gekennzeichnet,**
**dass** das Fasermaterial als Vlies ausgebildet Ist.

10. Einrichtung nach einem der Ansprüche 1 bis 9,
**dadurch gekennzeichnet,**
**dass** die Achse der zylindrischen Gehäusewandung (13) Im Betrieb der Einrichtung stehend ausgerichtet Ist.

11. Einrichtung nach Anspruch 10,
**dadurch gekennzeichnet,**
**dass** unterhalb des unteren Endes der Aufprallringwand (12) ein Flüssigkeitssammelraum (27) angeordnet ist.

12. Einrichtung nach Anspruch 11,
**gekennzeichnet durch** die Merkmale,
- die Einrichtung ist integriert in ein Gehäuse, das ein Unterteil- und ein Oberteil (18, 19) umfasst,
- das Unterteil (18) weist eine topfförmige Gehäuse-Außenwand auf,
- In das Innere des Gehäuseunterteiles (18) ragt zentral aus dessen Boden die zylindrische Gehäusewandung (13),
- das Innere der zylindrischen Gehäusewandung (13) kommuniziert **durch** den Boden des Gehäuseunterteils (18) mit dem Einlasskanal (8) für aufzunehmenden Ölnebel,
- das Gehäuseobertell (19) enthält die Aufprallringwand (12),
- in dem Gehäuseunterteil (18) umfasst ein Ringraum (27) den zentral von der zylindrischen Gehäusewandung (13) und der Aufprallringwand (12) eingenommenen Raum über etwa die gesamte Höhe des Gehäuseunterteils (18),
- ein radial zwischen der Aufprallringwand (12) und der zylindrischen Gehäusewandung (13) liegender Ölabscheideraum kommuniziert mit dem Ringraum (27) des Gehäuseunterteils (18),
- die mindestens eine Beschleunigungsöffnung (15, 16) liegt In einem axial oberen und der Zugang zu dem Ringraum (27) in einem axial unteren Bereich des Gehäuseunterteiles (18),
- das Gehäuseoberteil (19) enthält den Auslasskanal (9), der mit dem Ringraum (27) des Gehäuseunterteils (18) kommuniziert.

13. Einrichtung nach Anspruch 12,
**dadurch gekennzeichnet,**
**dass** innerhalb des Gehäuseoberteils (19) In dem Strömungsweg zwischen dem Ringraum (27) des Unterteils (18) und dem Auslasskanal (9) ein, von der Luft zu passierendes Druckregelventil (29) vorgesehen ist, von dem zumindest Teile einstückig in das Gehäuseoberteil (19) integriert sind.

14. Einrichtung nach Anspruch 13,
**dadurch gekennzeichnet,**
**dass** das Druckregulierventil (29) eine federbelastete Membran (31) umfasst, wobei die Membran der Druckdifferenz zwischen dem Druck innerhalb des Ölnebelabscheiders einerseits und der Atmosphäre andererseits ausgesetzt ist.

15. Einrichtung nach Anspruch 14,
**dadurch gekennzeichnet,**
**dass** die Membran (31) dem offenen axialen Ende eines mit dem Auslasskanal (9) kommunizierenden Napfes (29') zugeordnet ist, dessen offenen Einströmquerschnitt sie steuert, wobei diese Membran von dem Napfinneren aus in Öffnungsrichtung federbeaufschlagt ist.

16. Einrichtung nach Anspruch 15,
**dadurch gekennzeichnet,**
**dass** die Federwirkung von einer Schrauben-Druckfeder (32) ausgeht.

## Claims

1. Device which can be used for venting a crankcase of a combustion engine for separating a gas-liquid mixture, in which the liquid content is in the form of small particles, by separating and coagulating the liquid particles on an impingement surface that the liquid mixture strikes approximately at right angles after being accelerated into acceleration openings provided for this purpose, wherein the total cross section of the acceleration openings (5, 6; 15, 16) arranged in a flow path between an input side or an input channel (8) and an output side or an output channel (9) is varied between a small total cross section at a low volume flow and a large total cross section at a high volume flow, wherein at least one sealing element (4, 14) that is shifted as a function of volume flow controls the extent to which the flow can pass through the acceleration openings (5, 6; 15, 16) of the device, wherein at least one acceleration opening (15, 16) passes radially through a cylindrical housing wall (13) and the sealing element (14) can be displaced along the axis of the cylindrical housing wall (13) and the cross section of only one portion of the acceleration openings can be controlled, **characterised in that** as a controllable acceleration opening (16) a slot is formed which radially surrounds the axis of the cylindrical housing (13) which slot is opened or closed by a variable amount depending on the volume flow and **in that** the following features are provided:
- the radially peripheral slot opening representing a radial acceleration opening (16) is provided on an output-side axial end of the cylindrical housing wall (13),
- the sealing element (14) consists of a spring-loaded disk-shaped plate (14') cooperating with an axial end face of the cylindrical housing wall (13) in the manner of a valve (7), by means of which the axial end face can be closed, wherein the spring force acts in the closing direction of the valve (7) and the spring force opposes a negative pressure existing outside of the cylindrical wall (13) and acting on the disc-like plate (14') in the opening direction of the valve (7) wherein the degree of opening of the valve (7), i.e. the axial slot height between the plate (14') and the housing wall (13), depends on the amount of negative pressure.

2. Device according to claim 1, **characterised in that** the disc-like plate (14') is designed as a one-piece or multi-part leaf spring (37; 37'; 37").

3. Device according to claim 2, **characterised in that** corrugations (39) forming radial nozzle sections are formed in the outer circumference of the leaf spring (37).

4. Device according to either claim 2 or claim 3, **characterised in that** the leaf spring (37) is articulated pivotably on the cylindrical housing wall (13).

5. Device according to any one of claims 1 to 4, **characterised in that** inside the cylindrical housing wall (13) distributed axially on the input side over the circumference of said housing wall first acceleration openings (15) are provided, the opening cross section of which is invariable.

6. Device according to any one of claims 1 to 5, **characterised in that** the cylindrical housing wall (13) containing the acceleration openings (15, 16) is surrounded by a radially outwards spaced apart impingement ring wall (12) for receiving the flow of mixture emerging from the at least one acceleration opening (15,16).

7. Device according to claim 6, **characterised in that** the impingement ring wall (12) comprises a radially inner lying, porous layer section.

8. Device according to claim 7, **characterised in that** the porous layer section is made from a fibre material.

9. Device according to claim 8, **characterised in that** the fibre material is in the form of a fleece.

10. Device according to any one of claims 1 to 9, **characterised in that** the axis of the cylindrical housing wall (13) is aligned to be upright during the operation of the device.

11. Device according to claim 10, **characterised in that** a fluid collecting space (27) is arranged beneath the lower end of the impingement ring wall (12).

12. Device according to claim 11, **characterised by** the features
- the device is integrated into a housing that comprises a lower part and an upper part (18,19),
- the lower part (18) has a pot-shaped housing outer wall,
- the cylindrical housing wall (13) projects centrally into the interior of the lower housing part (18) from the base of the latter,
- the interior of the cylindrical housing wall (13) communicates through the base of the lower housing part (18) with the inlet channel (8) for oil mist to be taken up,
- the upper housing part (19) contains the impingement ring wall (12),
- an annular space (27) in the housing lower part (18) surrounds the space taken up centrally by the cylindrical housing wall (13) and the impingement ring wall (12) over approximately the whole height of the lower housing part (18),
- an oil separating chamber positioned radially between the impingement ring wall (12) and the cylindrical housing wall (13) communicates with the annular space (27) of the lower housing part (18),
- the at least one acceleration opening (15, 16) is positioned in an axially upper area of the lower housing part and the access to the annular space (27) is positioned in an axially lower area of the lower housing part (18),
- the upper housing part (19) contains the outlet channel (9) that communicates with the annular space (27) of the lower housing part (18).

13. Device according to claim 12, **characterised in that** inside the upper housing part (19) in the flow path between the annular space (27) of the lower part (18) and the outlet channel (9), a pressure regulating valve (29) is provided through which air is to pass, at least portions of the latter being integrated in one piece into the upper housing part (19).

14. Device according to claim 13, **characterised in that** the pressure regulating valve (29) comprises a spring-loaded diaphragm (31), wherein the diaphragm is exposed to the pressure difference between the pressure inside the oil mist separator on the one hand and the atmosphere on the other hand.

15. Device according to claim 14, **characterised in that** the diaphragm (31) is allocated to the open axial end of a cup (29') communicating with the outlet channel (9), the open inlet cross section of which controls it, wherein said diaphragm is spring-loaded in the direction of opening from the interior of the cup.

16. Device according to claim 15, **characterised in that** the spring action emanates from a helical compression spring (32).

## Revendications

1. Système se destinant à l'aération d'un carter de vilebrequin d'un moteur à combustion interne, servant à séparer un mélange de gaz et de liquide, dans lequel la fraction en liquide est présente sous la forme de petites particules, par isolation et coagulation des particules de liquide au niveau d'une surface d'impact, sur laquelle le mélange de liquide vient se heurter à peu près de manière perpendiculaire après une accélération dans des ouvertures d'accélération prévues à cet effet,
la section transversale totale des ouvertures d'accélération (5, 6, 15, 16) disposées sur un trajet d'écoulement entre un côté d'entrée ou un canal d'entrée (8) et un côté de sortie ou un canal de sortie (9) varie entre une petite section transversale totale dans le cas d'un flux volumique inférieur et une grande section transversale totale dans le cas d'un flux volumique élevé, au moins un élément de fermeture (4, 14) se déplaçant en fonction du flux volumique commandant la mesure de la perméabilité des ouvertures d'accélération (5, 6, 15, 16) du système, au moins une ouverture d'accélération (15, 16) traversant de manière radiale une cloison de carter (13) cylindrique et l'élément de fermeture (14) pouvant être déplacé par coulissement le long de l'axe de la cloison de carter (13) cylindrique et la section transversale seulement d'une partie des ouvertures d'accélération pouvant être commandée,
**caractérisé en ce**
**qu'**une entaille située en périphérie de manière radiale tout autour de l'axe de la cloison de carter (13) cylindrique est réalisée sous la forme d'une ouverture d'accélération (16) pouvant être commandée, laquelle entaille est ouverte en grand ou fermée de manière différente en fonction du flux volumique, et en ce que sont prévues des caractéristiques qui suivent :
- l'ouverture d'entaille située en périphérie de manière radiale, constituant l'ouverture d'accélération (16) est prévue au niveau d'une extrémité axiale côté sortie de la cloison de carter (13) cylindrique,
- l'élément de fermeture (14) est constitué d'un plateau (14') en forme de disque, soumis à l'action d'un ressort, coopérant avec un côté frontal axial de la cloison de carter (13) cylindrique à la manière d'une soupape (7), par lequel plateau le côté frontal axial peut être fermé, la force de ressort agissant en direction d'une fermeture de la soupape (7) et une dépression régnant à l'extérieur de la cloison (13) cylindrique, agissant sur le plateau (14') en forme de disque contrecarrant la force de ressort en direction d'une ouverture de la soupape (7), le degré d'ouverture de la soupape (7), en d'autres termes la hauteur d'entaille axiale entre le plateau (14') et la cloison de carter (13), dépendant de l'importance de la dépression.

2. Système selon la revendication 1,
**caractérisé en ce**
**que** le plateau (14') en forme de disque est réalisé sous la forme d'un ressort à lames (37 ; 37' ; 37") en une partie ou en plusieurs parties.

3. Système selon la revendication 2,
**caractérisé en ce**
**que** des moulures (39) réalisant au niveau de la périphérie extérieure du ressort à lames (37) des sections de buse radiales sont formées.

4. Système selon la revendication 2 ou 3,
**caractérisé en ce**
**que** le ressort à lames (37) est articulé de manière à pouvoir pivoter au niveau de la cloison de carter (13) cylindrique.

5. Système selon l'une quelconque des revendications 1 à 4,
caractérisé en ce
sont prévues, à l'intérieur de la cloison de carter (13) cylindrique, côté entrée de manière axiale, de manière répartie sur la périphérie de la cloison de carter, des premières ouvertures d'accélération (15), dont la section transversale d'ouverture est respectivement invariable.

6. Système selon l'une quelconque des revendications 1 à 5,
**caractérisé en ce**
**que** la cloison de carter (13) cylindrique contenant les ouvertures d'accélération (15, 16) est entourée par une paroi annulaire d'impact (12) tenue à distance de manière radiale à l'extérieur, servant à recevoir le flux de mélange sortant de l'ouverture d'accélération (15, 16) au moins au nombre de une.

7. Système selon la revendication 6,
**caractérisé en ce**
**que** la paroi annulaire d'impact (12) présente une zone de couche poreuse située de manière radiale à l'intérieur.

8. Système selon la revendication 7,
**caractérisé en ce**
**que** la zone de couche poreuse est constituée d'un matériau à base de fibres.

9. Système selon la revendication 8,
**caractérisé en ce**
**que** le matériau à base de fibres est réalisé sous la forme d'un non-tissé.

10. Système selon l'une quelconque des revendications 1 à 9,
**caractérisé en ce**
**que** l'axe de la paroi de boîtier (13) cylindrique est orienté à la verticale lors du fonctionnement du système.

11. Système selon la revendication 10,
**caractérisé en ce**
**qu'**une chambre collectrice de liquide (27) est disposée sous l'extrémité inférieure de la paroi annulaire d'impact (12).

12. Système selon la revendication 11,
**caractérisé par** les caractéristiques qui suivent :
- le système est intégré dans un carter, qui comprend une partie inférieure et une partie supérieure (18, 19),
- la partie inférieure (18) présente une paroi extérieure de carter en forme de pot,
- la cloison de carter (13) cylindrique dépasse de manière centrale depuis la base de l'intérieur de la partie inférieure de carter (18) à l'intérieur de ce dernier,
- l'intérieur de la cloison de carter (13) cylindrique communique par la base de la partie inférieure de carter (18) avec le canal d'entrée (8) pour un brouillard d'huile à recevoir,
- la partie supérieure de carter (19) contient la paroi annulaire d'impact (12),
- un espace annulaire (27) entoure, dans la partie inférieure de carter (18), l'espace enfermé par la cloison de carter (13) cylindrique et la paroi annulaire d'impact (12) sur à peu près la hauteur totale de la partie inférieure de carter (18),
- un espace de séparation d'huile situé de manière radiale entre la paroi annulaire d'impact (12) et la cloison de carter (13) cylindrique communique avec l'espace annulaire (27) de la partie inférieure de carter (18),
- l'ouverture d'accélération (15, 16) au moins au nombre de une se situe dans une zone supérieure de manière axiale de la partie inférieure de carter et l'accès à l'espace annulaire (27) se situe dans une zone inférieure de manière axiale de la partie inférieure de carter (18),
- la partie supérieure de carter (19) contient le canal de sortie (9), qui communique avec l'espace annulaire (27) de la partie inférieure de carter (18).

13. Système selon la revendication 12,
**caractérisé en ce**
**qu'**est prévue, à l'intérieur de la partie supérieure de carter (19), dans le trajet d'écoulement entre l'espace annulaire (27) de la partie inférieure (18) et le canal de sortie (9), une soupape de régulation de pression (29) devant être traversée par de l'air, depuis laquelle au moins des parties sont intégrées d'un seul tenant dans la partie supérieure de carter (19).

14. Système selon la revendication 13,
**caractérisé en ce**
**que** la soupape de régulation de pression (29) comprend une membrane (31) soumise à l'action d'un ressort, la membrane étant exposée à la différence de pression entre la pression à l'intérieur du séparateur de brouillard d'huile d'une part et à l'atmosphère d'autre part.

15. Système selon la revendication 14,
**caractérisé en ce que**
la membrane (31) est associée à l'extrémité axiale ouverte d'une coupelle (29') communiquant avec le canal de sortie (9), dont elle commande la section transversale ouverte de flux entrant, ladite membrane étant soumise à l'action d'un ressort depuis l'intérieur de coupelle en direction de l'ouverture.

16. Système selon la revendication 15,
**caractérisé en ce**
**que** l'action de ressort part d'un ressort hélicoïdal de compression (32).
